**Europäisches Patentamt**

**European Patent Office**

**Office européen des brevets**

(19)

(11) **EP 1 326 065 A1**

(12) **EUROPEAN PATENT APPLICATION**

(43) Date of publication:
**09.07.2003 Bulletin 2003/28**

(51) Int Cl.7: **G01M 1/16**, G01M 1/30, G01M 1/20

(21) Application number: **02028569.8**

(22) Date of filing: **20.12.2002**

| | |
|---|---|
| (84) Designated Contracting States:<br>**AT BE BG CH CY CZ DE DK EE ES FI FR GB GR IE IT LI LU MC NL PT SE SI SK TR**<br>Designated Extension States:<br>**AL LT LV MK RO** | (72) Inventors:<br>• **Reyneri, Leonardo**<br>**10050 Villarfocchiardo (Torino) (IT)**<br>• **Gregoretti, Francesco**<br>**10129 Torino (IT)** |
| (30) Priority: **24.12.2001 IT TO20011218** | (74) Representative: **Serra, Francesco et al**<br>**Jacobacci & Partners S.p.A.,**<br>**Corso Regio Parco, 27**<br>**10152 Torino (IT)** |
| (71) Applicant: **REDAT S.p.A**<br>**10121 Torino (IT)** | |

(54) **A method of measuring the unbalance of rotors**

(57) A method of measuring unbalances of a rotor (A) is described and is based on:

a) imparting a rotation to the rotor (A) about its mechanical axis (M),

b) compensating dynamically for the forces of-inertia due to the unbalances, by means of actuators (C, F), until zero vibration of the rotor (A), at least along an axis (Y) perpendicular to the axis of rotation (M), is achieved, and

c) analytically obtaining the magnitude and the angular position of the unbalances, related to one or more reference planes ($Q_1$, $Q_2$) preselected by the user, upon the assumption that the position of the centre of gravity (K) of the rotor (A) is known.

**Description**

The present invention relates to a method of measuring the unbalance of rotors, particularly of turbines for motor-vehicle turbochargers.

The methods currently used in so-called balancing machines for measuring the unbalance of rotors are based substantially on imparting a rotary movement to the rotor about its mechanical axis and measuring the amplitude and phase of the vibrations which the non-balanced rotor imparts to two supports which are free to move in a reference plane or along a reference axis.

The amplitude and phase of the vibrations depend on the magnitude of the unbalance of the rotor, on its speed of rotation (known), and on some geometrical and mechanical parameters of the rotor including its mass, its moment of inertia, and the position of its centre of gravity.

The unbalance measurement which is performed at the moment is therefore an indirect measurement which takes place by the measurement of vibrations.

The determination of the above-mentioned parameters, which is necessary in order to obtain the magnitude and the position of the unbalance from the vibration measurements, requires various strategies since some parameters are not known with sufficient accuracy beforehand.

Moreover, some internal parameters of the measuring instrument, in particular the elastic constants and the friction of the rotor supports, may significantly affect the accuracy of the measurement.

In conventional commercial instruments, two main methods are used to find the characteristics of the rotor and/or the internal parameters of the measuring instrument:

1) three consecutive measurements are taken, that is: a first measurement of the rotor alone, a second measurement with the addition of material, for example, self-adhesive gummy material of known mass, in a reference plane, and a third measurement with the addition of further material, in a second reference plane; the magnitude and position of unbalances of the rotor can be found from the difference between the three measurements taken, without knowing the geometrical and mechanical parameters of the rotor and/or the internal parameters of the instrument;

2) when the shape and distribution of the masses within the rotor are known and the measuring instrument has been characterized very accurately, some measurements of rotor weight and dimensions suffice to find the values of the parameters with sufficient accuracy.

The first of the above-mentioned methods requires both appropriate competence and manual skill on the part of the operator, and hence good operator training, and a more laborious measurement; altogether this results in a decidedly high measurement cost.

The second of the above-described methods can be used only for rotors and measuring instruments of some well-defined types and cannot therefore easily be generalized.

In the field of the measurement of the unbalance of turbines for turbochargers for automotive applications in particular, the first of the above-mentioned methods is used practically universally.

The object of the present invention is to provide a method of measuring the unbalance of rotors, particularly of turbines for automotive turbochargers, which overcomes the above-mentioned disadvantages and which is easy to implement, inexpensive, and highly accurate.

The present invention achieves the above-mentioned objects by means of a method of measuring the unbalance of rotors, particularly of turbines for motor-vehicle turbochargers, having the characteristics specified in the appended claims.

Before discussing the merits of the invention, it is necessary to make some preliminary remarks.

The method of the present invention is based on a completely different principle from those described according to the prior art, that is, on compensating entirely for the forces of inertia due to the unbalances and to the rotation of the rotor, by means of alternating forces which are applied from the exterior, are synchronous with the rotation of the rotor, and are of a magnitude and phase such as to cancel out as far as possible the vibrations of the rotor.

When these applied forces completely balance the forces of inertia due to the unbalances, the rotor stops vibrating; the measurement of the forces applied is a direct measurement of the magnitude and angular position of the unbalances of the rotor (related to the points of application of the external forces) and does not therefore require a precise knowledge of the geometrical and mechanical parameters of the rotor or of the internal parameters of the measuring instrument.

However, in order to relate the unbalances to points other than the points of application of the forces - as is normally required by the user who usually performs the balancing in two reference planes - it is also necessary to know the position of the centre of gravity of the rotor, which can be found by methods similar to the unbalance measurement, as will be described below.

It is thus possible to measure the unbalance in a single operation instead of three, without prior knowledge of the distribution of mass within the rotor, with clear advantages with regard to ease and speed of measurement and generality of use.

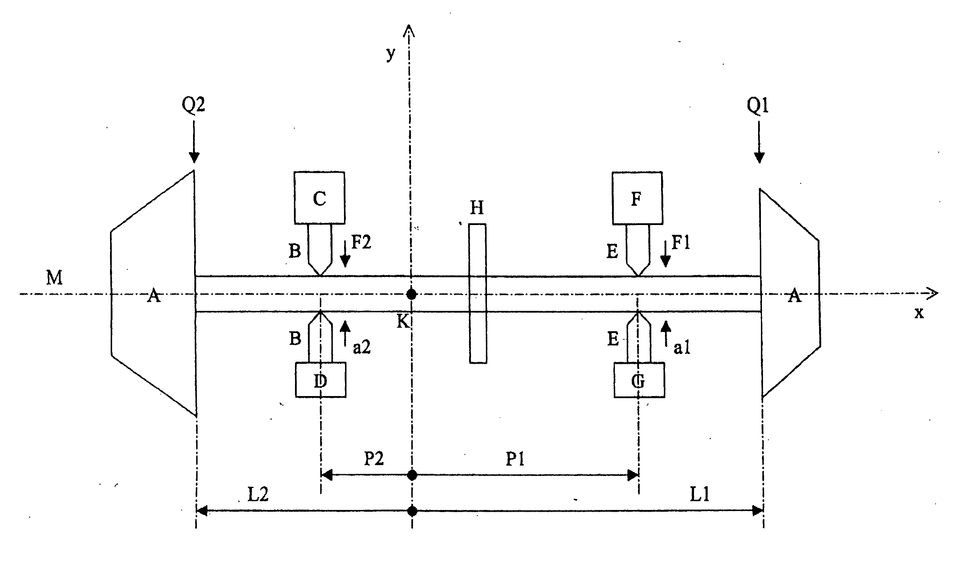

Further characteristics and advantages of the present invention will become clear in the course of the following detailed description which is given purely by way of nonlimiting example with reference to the appended drawing in which a rotor A is placed on two supports B and E provided with balanced ball bearings or other means suitable for allowing the rotor to rotate freely about its mechanical axis M; the mechanical axis M coincides with a Cartesian axis X.

The supports B and E are free to move, at least parallel to an axis Y perpendicular to the axis X, and hence perpendicular to the axis of rotation M.

The freedom of movement may be either total, or constrained by a resilient set of forces which tend to return the supports B and E to a known reference position.

A system of pulleys, belts, or other devices H brings about rotation of the rotor at a known, preferably fixed, velocity ω (expressed in radians per second).

Two instruments D and G, which may be accelerometers, velocity sensors, or position sensors, measure - directly or indirectly - for example, by measurements of velocity or displacement, the component parallel to the axis Y of the absolute accelerations $a_1$, $a_2$ of the supports, and hence of the rotor A, at the points at which the rotor axis M bears on the supports B and E.

Actuators C, F impart a pair of forces $F_1$, $F_2$ to the supports B and E and - thereby - to the rotor at the points at which it bears on the supports.

Each actuator may be, for example, a permanent magnet disposed inside a solenoid.

It is assumed that:

- K is the position of the centre of gravity of the rotor, which may be unknown,
- M is the total mass of the rotor A and of the supports B, E, which may be unknown,
- J is the moment of inertia (which may be unknown) of the rotor A, combined with the supports B, E, about the axis Y extending through the centre of gravity K,
- ω is the angular velocity of rotation of the rotor A about its axis M,
- $P_1$ (or $P_2$, respectively) is the distance, with sign, parallel to the axis of rotation M, of the support E (or of the support B, respectively) from the centre of gravity K,
- P is the distance between the two supports, that is $P = P_1 - P_2$,
- $L_1$ (or $L_2$, respectively) is the distance, parallel to the axis of rotation M, from the centre of gravity K to the plane $Q_1$ (or plane $Q_2$, respectively) to which the magnitude and the angular position of the unbalance is to be related,
- $F_1$ (or $F_2$, respectively) is the force applied by the actuator F (or C, respectively), land
- $a_1$ (or $a_2$, respectively) is the acceleration of the support E (or B, respectively), and, moreover, that:

- $S_1$ (or $S_2$, respectively) is the magnitude of the unbalance related to the plane $Q_1$, (or $Q_2$, respectively), and
- $\Phi_1$ (or $\Phi_2$, respectively) is the angular position of the unbalance, relative to the plane $Q_1$ (or $Q_2$, respectively).

The measurement takes place in several successive steps:

a) (optional) with the rotor stationary (ω = 0), a first set of forces (where $F_0$ is an arbitrary reference force, for example 1N, and α is an arbitrary pulsation, preferably close to the angular velocity ω at which step c) is performed) is applied:

- $F_1(t) = F_0 \cdot \cos(\alpha t)$
- $F_2(t) = F_0 \cdot \cos(\alpha t)$;

the resulting accelerations $a_1(t)$ and $a_2(t)$ are sampled for a predetermined period of time T (preferably for a whole number of cycles of the forces $F_1$ and $F_2$); the following factors are calculated:

$$A_{1'} = \frac{1}{T} \int_0^T a_1(t) \cdot \cos(\alpha t) dt$$

$$A_{2'} = \frac{1}{T} \int_0^T a_2(t) \cdot \cos(\alpha\, t)\, dt$$

b) (optional) with the rotor stationary ($\omega = 0$), a second set of forces (where $F_0$ and $\alpha$ are the same as in step a) is applied:

$$- F_1(t) = F_0 \cdot \cos(\alpha t)$$

$$- F2(t) = F_0 \cdot \cos(at);$$

the resulting accelerations $a_1(t)$ and $a_2(t)$ are sampled for a predetermined period of time T (preferably for a whole number of cycles of the forces $F_1$ and $F_2$); the following factors are calculated:

$$A_{1''} = \frac{1}{T} \int_0^T a_1(t) \cdot \cos(\alpha\, t)\, dt$$

$$A_{2''} = \frac{1}{T} \int_0^T a_2(t) \cdot \cos(\alpha\, t)\, dt$$

the following values are calculated:

$$P_1 = P \cdot \frac{A_{2''}}{A_{2''} - A_{1''}}$$

$$P_2 = P \cdot \frac{A_{1''}}{A_{2''} - A_{1''}}$$

$$M = F_0 \cdot \frac{A_{2''} - A_{1''}}{A_{1'} \cdot A_{2''} - A_{2'} \cdot A_{1''}}$$

$$J = D^2 \cdot F_0 \cdot \frac{A_{2''} + A_{1''}}{2 \cdot (A_{2''} - A_{1''}) \cdot (A_{2'} - A_{1'})}$$

if these parameters are already known, the first two steps may be omitted;

c) the following are set initially:

$$- G_1 = 0$$

$$- G_2 = 0$$

$$- n = 0;$$

d) the rotor is then rotated at an angular velocity ω and a third set of forces is applied:

$$F_1(t) = re(G_1 \cdot \exp(j\omega t))$$

$$F_2(t) = re(G_2 \cdot \exp(j\omega t))$$

where re(x) represents the real portion of x and exp($jx$) = cos($x$) + $j$sin($x$) is an exponential of complex argument. The complex exponential must be synchronized with the rotation of the rotor, that is, t = 0 when the rotor is in a known angular position (for example, when an optical locator is detected by a suitable sensor); an electronic circuit (a "Phase Locked Loop" PLL) detects the absolute rotation of the rotor and generates two sinusoidal signals of amplitude $|G_1|$ (or $|G_2|$, respectively) and phase $\angle G_1$ (or $\angle G_2$, respectively);

e) the accelerations $a_1(t)$ and $a_2(t)$ are sampled for a predetermined period of time T (preferably for a whole number of revolutions of the rotor), and the following factors are calculated:

$$A_1 = \frac{1}{T}\int_0^T a_1(t) \cdot \exp(j\alpha\, t)dt$$

$$A_2 = \frac{1}{T}\int_0^T a_2(t) \cdot \exp(j\alpha\, t)dt$$

it should be noted that $A_1$ and $A_2$ are complex numbers; from these and from the preceding equations, the following vectors and matrices are obtained:

$$Z = [(G_1 + G_2), (P_1 \cdot G_1 + P_2 \cdot G_2)]$$

$$A = [A_1, A_2]$$

$$L = \begin{bmatrix} 1 & L_1 \\ 1 & L_2 \end{bmatrix}$$

$$M = \begin{bmatrix} \dfrac{M}{2}, & \dfrac{-J}{P_2 - P_1} \\ \dfrac{M}{2}, & \dfrac{+J}{P_2 - P_1} \end{bmatrix}$$

f) a new value is calculated for:

$$Z(n + 1) = Z(n) - A \cdot M$$

$$n = n + 1$$

from which the new values of $G_1$ and $G_2$ are found by substitution;

g) the method is repeated from point d) (with the rotor kept rotating) until, simultaneously:

$$|A_1| < A_{min}$$

$$|A_2| < A_{min}$$

where $A_{min}$ is a suitable threshold value which determines the accuracy of the measurement, or:

$$n > N_{max}$$

where $N_{max}$ is a suitable maximum value which determines the maximum duration of the measurement;

h) upon completion, the unbalances are related to the reference planes $Q_1$ and $Q_2$, defining

$$W = \frac{Z \cdot L^{-1}}{\omega^2}$$

from which the following are found:

$$S_1 = |W(1)|, \quad S_2 = |W(2)|, \quad \Phi_1 = \angle(W(1)), \quad \Phi_2 = \angle(W(2)),$$

where

$$\angle(x) = tg^{-1}\frac{Im(x)}{re(x)}$$

It should be noted that all of the steps described above can be performed consecutively in a single procedure, automatically and without any manual intervention.

The actuators can be calibrated whenever desired (for example, when the instrument is switched on) by means of an automatic procedure based on step 1 of the measurement (see above). With this method, the mass of the supports alone - which is assumed to be known - can be measured (after the rotor has been removed from the supports) and the actuator can optionally be calibrated, if the measurement (see formulae given above) differs from the known mass value.

If the mass of the supports is unknown, two successive measurement steps may be performed, of which the first is as described above and the second provides for the addition of a sample mass to each of the supports and the taking of a differential measurement.

Naturally, the principle of the invention remaining the same, wide variations may be applied to the embodiment described and illustrated without thereby departing from the scope of the invention.

**Claims**

1.   A method of measuring unbalances of a rotor (A), **characterized in that** it comprises the steps of:

a) imparting a rotation to the rotor (A) about its mechanical axis (M),

b) compensating dynamically for the forces of inertia due to the unbalances, by means of actuators (C, F), until zero vibration of the rotor (A), at least along an axis (Y), perpendicular to the axis of rotation (M), is achieved, and

c) analytically obtaining the magnitude and the angular position of the unbalances relative to one or more reference planes ($Q_1$, $Q_2$) preselected by the user, upon the assumption that the position of the centre of gravity (K) of the rotor (A) is known.

2. A method according to Claim 1, **characterized in that** the position of the centre of gravity (K) of the rotor (A) is measured with the rotor stationary, by:

d) the application of a set of forces $F_1$, $F_2$, by means of the actuators (C, F), and

e) the measurement of the corresponding vibrations of the rotor (A).

3. A method according to Claim 1, **characterized in that** the position of the centre of gravity (K) of the rotor (A) is measured, with the rotor rotating, by:

f) the application of a set of alternating forces ($F_1$, $F_2$) synchronous with the rotation of the rotor (A), by means of the actuators (C, F), and

g) the measurement of the corresponding variation of the vibrations of the rotor (A).

4. A method according to Claims 1 to 3, **characterized in that** the mass and the moment of inertia of the rotor (A) are estimated, with the rotor stationary, by:

h) the application of a first set of forces by means of the actuators (C, F),

i) the measurement of the corresponding vibrations of the rotor (A),

l) the application of a second set of forces (different from the first either in module or in phase) by means of the actuators (C, F), and

m) the measurement of the corresponding vibrations of the rotor (A).

5. A method according to Claims 1 to 3, **characterized in that** the mass and the moment of inertia of the rotor (A) are estimated, with the rotor rotating, by:

n) the application of a first set of alternating forces, synchronous with the rotation of the rotor (A), by means of the actuators (C, F),

o) the measurement of the corresponding vibrations of the rotor (A),

p) the application of a second set of forces (different from the first either in module or in phase) by means of the actuators (C, F), and

q) the measurement of the corresponding vibrations of the rotor (A).

6. A method according to any one of the preceding claims, **characterized in that** the cancelling-out of the vibration is measured by means of one or more acceleration, velocity, or position sensors.

7. A method according to any one of the preceding claims, **characterized in that** each actuator (C, F) is formed by a permanent magnet or an electromagnet positioned within a magnetic circuit of a solenoid driven by means of currents optionally synchronous with the rotation of the rotor (A), or by a piezoelectric actuator.

8. A method according to Claim 7, **characterized in that** the currents are produced by means of an electronic generating circuit, optionally synchronized with the rotation of the rotor (A).

9. A method according to Claims 7 and 8, **characterized in that** the synchronization with the rotation of the rotor (A) is performed by means of an optical or magnetic sensor.

**10.** A method according to any one of the preceding claims, **characterized in that** the compensation for the forces of inertia takes place by means of a method of successive approximations.

**11.** A method according to any one of the preceding claims, **characterized in that** the characterization of the actuators (C, F) is performed by:

- the application of a set of alternating forces, by means of the actuators (C, F), to the movable supports of the rotor (A) alone (after the rotor has been removed);

- the measurement of the corresponding vibrations of the supports, upon the assumption that the mass of the supports is known.

**12.** A method according to Claim 11, **characterized in that** the mass of the supports is measured by:

- the application of a set of alternating forces, by means of the actuators (C, F), to the movable supports of the rotor (A) alone, after the rotor has been removed,

- the measurement of the corresponding vibrations of the supports,

- the fixing of a sample mass to each of the supports,

- the application of the set of alternate forces, by means of the actuators (C, F), to the supports and to the sample masses, and

- the measurement of the corresponding vibrations of the supports.

The whole substantially as described and illustrated and for the purposes specified.

**European Patent Office**

# EUROPEAN SEARCH REPORT

Application Number

EP 02 02 8569

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | DE 197 50 601 A (KRAUSS MAFFEI AG) 20 May 1999 (1999-05-20) * the whole document * --- | 1,4-8,10 | G01M1/16 G01M1/30 G01M1/20 |
| A | US 5 084 643 A (CHEN HSIANG M) 28 January 1992 (1992-01-28) * abstract; figure 1A * --- | 1-12 | |
| A | DE 41 33 787 A (SCHENCK AG CARL) 15 April 1993 (1993-04-15) * the whole document * ----- | 1-12 | |

| | TECHNICAL FIELDS SEARCHED (Int.Cl.7) |
|---|---|
| | G01M |

The present search report has been drawn up for all claims

| Place of search | Date of completion of the search | Examiner |
|---|---|---|
| BERLIN | 15 April 2003 | Zafiropoulos, N |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT**
**ON EUROPEAN PATENT APPLICATION NO.**

EP 02 02 8569

This annex lists the patent family members relating to the patent documents cited in the above-mentioned European search report.
The members are as contained in the European Patent Office EDP file on
The European Patent Office is in no way liable for these particulars which are merely given for the purpose of information.

15-04-2003

| Patent document cited in search report | | Publication date | Patent family member(s) | | Publication date |
|---|---|---|---|---|---|
| DE 19750601 | A | 20-05-1999 | DE | 19750601 A1 | 20-05-1999 |
| US 5084643 | A | 28-01-1992 | NONE | | |
| DE 4133787 | A | 15-04-1993 | DE | 4133787 A1 | 15-04-1993 |

EPO FORM P0459

For more details about this annex : see Official Journal of the European Patent Office, No. 12/82